# EUROPEAN PATENT APPLICATION

(11) **EP 4 344 900 A1**
(43) Date of publication of application: **03.04.2024**
(21) Application number: 22208738.9
(22) Date of filing: 22.11.2022
(51) Int. Cl.: B60B 3/00, B60B 3/04, B60B 3/10, B60B 5/02, B60B 23/10

(54) **MULTI-PIECE WHEEL FRAME**

(30) Priority: 27.09.2022 TW 111136546
(71) Applicant: Advanced International Multitech Co., Ltd., Kaohsiung City 81260 (TW)
(72) Inventor: HSIAO, Te-Fu, 80457 Kaohsiung City (TW); KUO, Che-Hao, 81260 Kaohsiung City (TW); CHANG, Chung-Hsin, 81260 Kaohsiung City (TW); WANG, Chia-Hsin, 81260 Kaohsiung City (TW); LIU, Erh-Wei, 81260 Kaohsiung City (TW)
(74) Representative: Page White Farrer

(57) **Abstract**

A multi-piece wheel frame includes a rim (2) and a disc (3). The rim (2) includes a barrel (21), and an outer rim portion (23) protruding outwardly from the barrel (2). The outer rim portion (23) forms an inclined surface (231), and a ring edge surface (232) cooperating with the inclined surface (231) to form an obtuse angle. The disc (3) is fixed to the rim (2), and includes a disc core (31), a plurality of spoke portions (32) extending radially outwardly from the disc core (31), and a reinforced ring portion (33) connected to the spoke portions (32). The reinforced ring portion (33) abuts against at least one of the inclined surface (231) and the ring edge surface (232).

## Description

The present disclosure relates to a wheel frame, more particularly to a multi-piece wheel frame made of multiple materials.

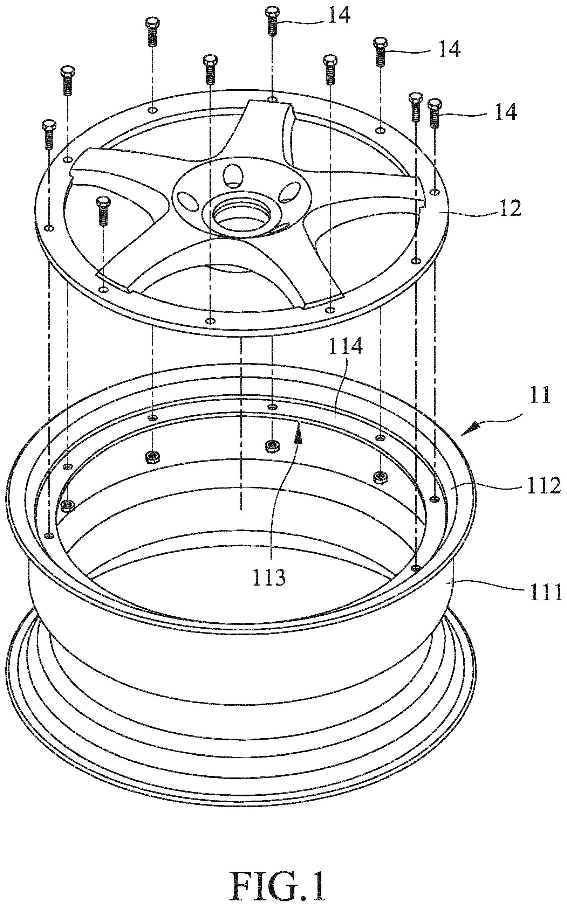

Referring to Fig. 1, a conventional multi-piece wheel frame includes a rim 11 for mounting a tire, and a disc 12 locked on the rim 11 for connecting with a wheel axle. The rim 11 includes a barrel 111 having a straight cylindrical shape, an outer rim portion 112 connected to an outer periphery of the barrel 111, and an inner flange portion 113 protruding inwardly from an intersection of the barrel 111 and the outer rim portion 112. The inner flange portion 113 forms a planar surface 114 that extends perpendicular to and outwardly from a central axis of the barrel 111. An outer periphery of the disc 12 abuts against the planar surface 114 and fixes the disc 12 onto the inner flange portion 113 through bolts 14. However, such design lacks any reinforcing structure relative to the inner surface of the outer rim portion 112 and has inferior overall structural strength, and therefore there is still room for improvement.

The object of the disclosure is to provide a hand tool that can alleviate at least one of the drawbacks of the prior art.

According to the disclosure, the multi-piece wheel frame includes a rim and a disc. The rim includes a barrel, an inner flange portion connected to a periphery of the barrel and protruding radially inwardly, and an outer rim portion protruding outwardly from an intersection of the barrel and the inner flange portion. The inner flange portion forms a planar surface that has a normal vector parallel to a central axis of the barrel. The outer rim portion forms an inclined surface that is connected to an outer periphery of the planar surface and that cooperates with the planar surface to form an obtuse angle, and a ring edge surface that is connected to an outer edge of the inclined surface and that cooperates with the inclined surface to form an obtuse angle. The disc is fixed to the rim, and includes a disc core, a plurality of spoke portions that extend radially outwardly from the disc core and that are annularly spaced apart from each other, and a reinforced ring portion that is connected to the spoke portions and that is fixed to the outer rim portion. The reinforced ring portion abuts against at least one of the inclined surface and the ring edge surface.

Other features and effects of the present disclosure will be clearly presented in the embodying manner with reference to the drawings, in which:
Fig. 1 is an exploded perspective view of a conventional wheel frame;
Fig. 2 is a fragmentary sectional view illustrating an embodiment of the multi-piece wheel frame according to the present disclosure;
Fig. 3 is an exploded perspective view of the embodiment;
Fig. 4 is a fragmentary sectional view of a modification of the embodiment;
Fig. 5 is an exploded perspective view of the modification in Fig. 5;
Fig. 6 is a fragmentary sectional view of another modification of the embodiment; and
Fig. 7 is an exploded perspective view of the modification in Fig. 6.

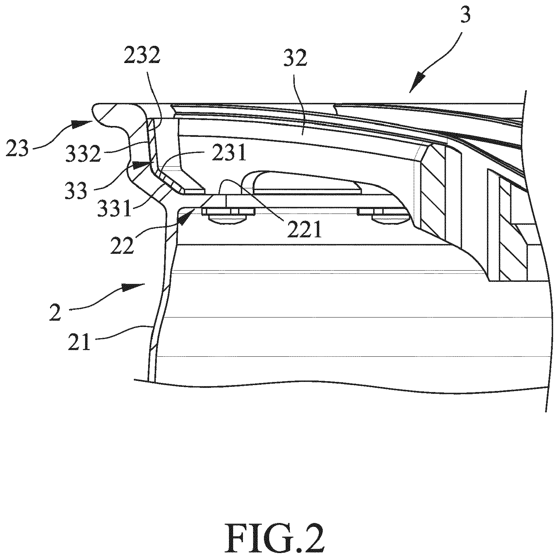

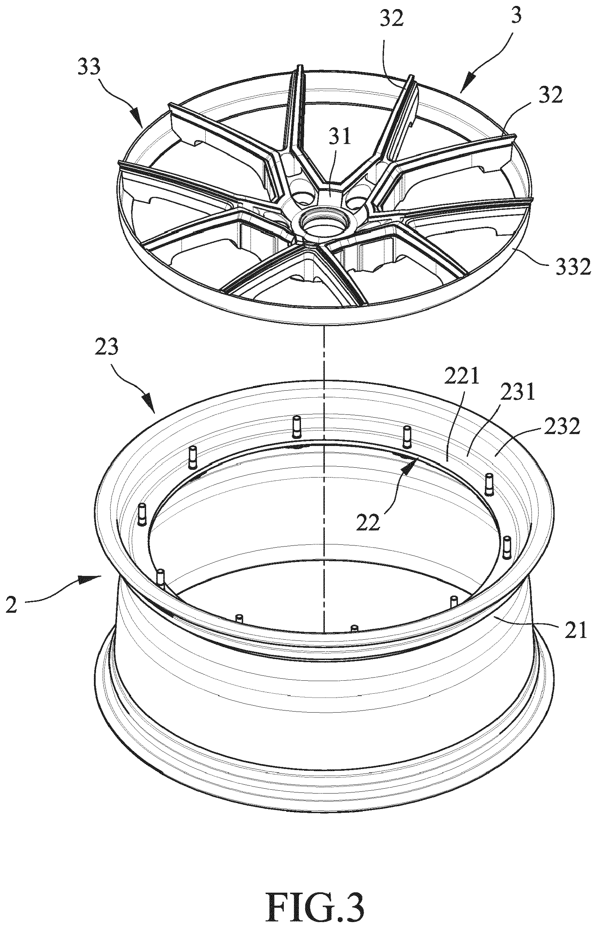

Referring to Figs. 2 and 3, an embodiment of the multi-piece wheel frame of this disclosure includes a rim 2, and a disc 3 fixed to the rim 2 through locking or other manner. The rim 2 is made of carbon fiber, and includes a generally straight cylindrical barrel 21, an inner flange portion 22 connected to a periphery of the barrel 21 and protruding radially inwardly, and an outer rim portion 23 protruding outwardly from an intersection of the barrel 21 and the inner flange portion 22. The inner flange portion 22 forms a planar surface 221 with a normal vector parallel to the central axis of the barrel 21. The planar surface 221 faces the outside (i.e., when mounted on one side of the vehicle, faces away from the vehicle) of the multi-piece wheel frame. The outer rim portion 23 forms an inclined surface 231 connected to an outer edge of the planar surface 221 and cooperating with the planar surface 221 to form an obtuse angle, and a ring edge surface 232 connected to an outer edge of the inclined surface 231 and cooperating with the inclined surface 231 to form an obtuse angle. A normal vector of the ring edge surface 232 is substantially perpendicular to the normal vector of the planar surface 221.

The disc 3 includes a disc core 31, a plurality of spoke portions 32 extending radially outwardly from the disc core 31 and annularly spaced apart from each other, and a reinforced ring portion 33 connected to the spoke portions 32 and fixed to the outer rim portion 23. The disc 3 may be integrally formed by aluminum alloy or other metallic material through forging or casting, or assembled by multiple pieces. Alternatively, the disc core 31 and the spoke portions 32 may be integrally formed by aluminum alloy or assembled by multiple pieces, while the reinforced ring portion 33 is made of different materials (e.g., other metallic materials or composite materials) and is connected to the spoke portions 32 through soldering, adhering, inserting, encapsulating, or other means. The reinforced ring portion 33 has an oblique annular surface 331 clinging to the inclined surface 231, and an annular peripheral surface 332 connected to an outer edge of the oblique annular surface 331 and clinging the ring edge surface 232.

When performing an impact test under Road Traffic No. 287, Section 30 StVZO Standard, the embodiment according to the disclosure can pass the test, while the conventional wheel frame structure cannot pass. In addition, Table below is the result of a radial impact test of the embodiment under TÜV (Technical Inspection Association) specification standard. Primarily, the teste simulates a rim impact when a vehicle is driving through a pit hole or an obstacle, so it is necessary for the rim to be installed on the impact testing apparatus after being mounted with a tire, so that a radial impact test in the direction of the valve hole can be performed. The rim load weight set in this embodiment is 650 kg. As can be seen from the results of the Table, in 60 seconds after impact, the internal pressure of the present disclosure does not drop to 0, which met the test criteria and passed the test.

| Energy (J) | drop weight (Kg) | drop height (mm) | drop velocity (m/s) | Pressure drop in 60 seconds after impact (bar) | deformation (mm) | force (kN) |
|---|---|---|---|---|---|---|
| 2795 | 210 | 1357 | 5 .2 | 2.5 | 2 . 8 | 66.8 |

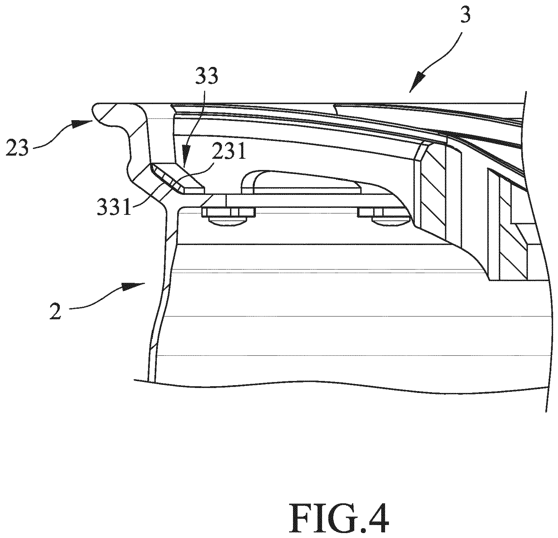

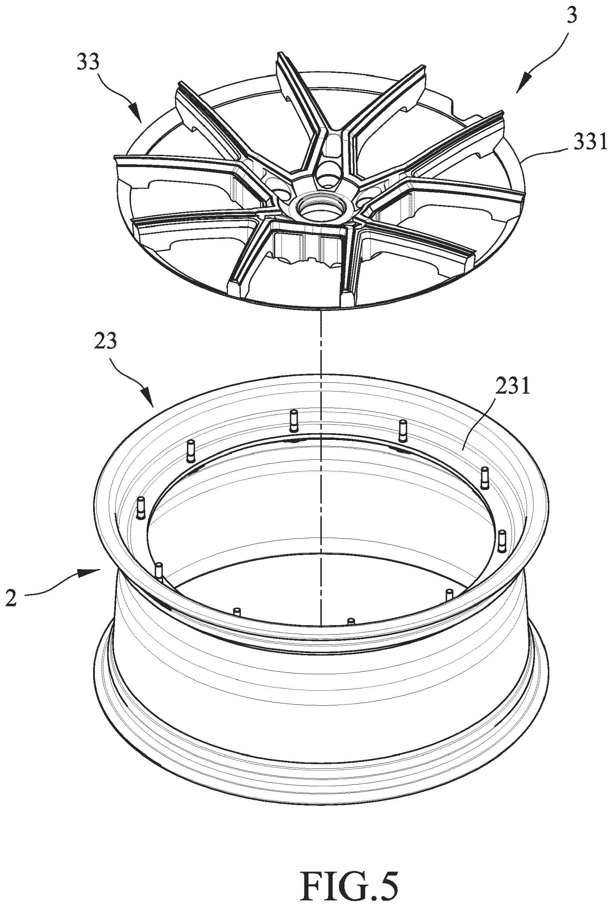

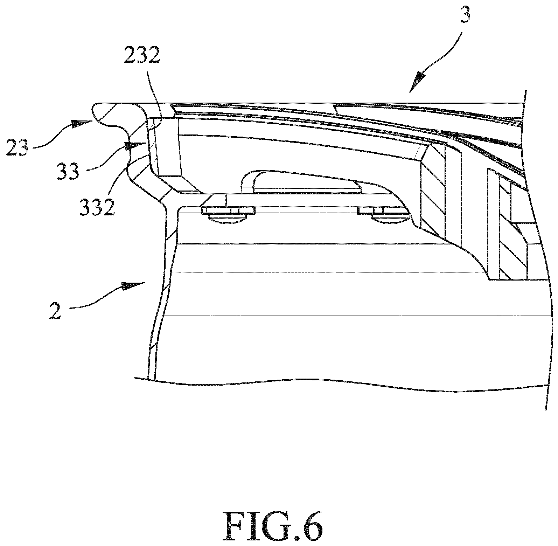

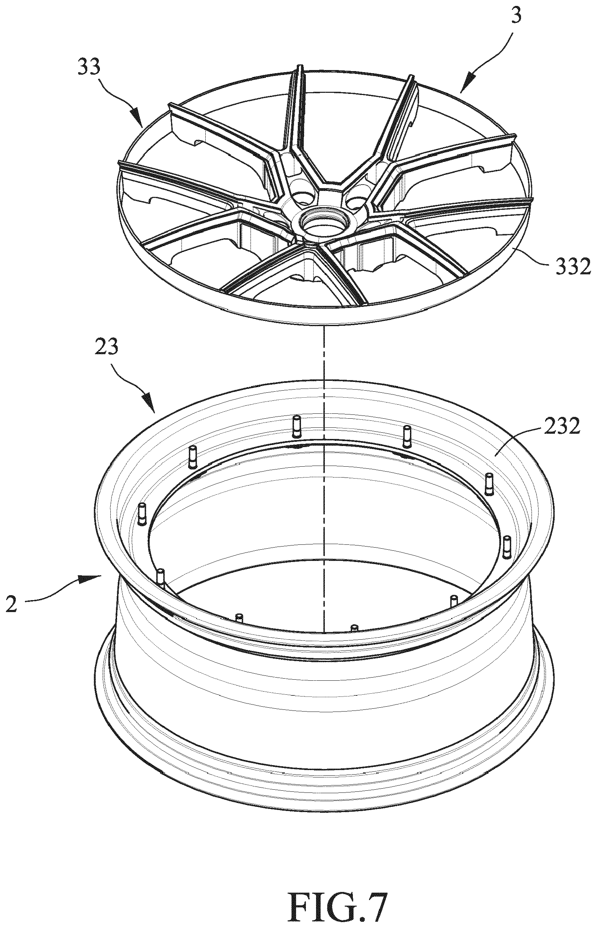

Referring to Figs. 4 to 7, the reinforced ring portion 33 may also have only the oblique annular surface 331 clinging the inclined surface 231 as shown in Figs. 4 and 5, or only the annular peripheral surface 332 clinging the ring edge surface 232 as shown in Figs. 6 and 7, thereby increasing the elasticity and universality of design.

In summary, through the design of the reinforced ring portion 33 abutting against at least one of the inclined surface 231 and the ring edge surface 232, the impacted portion is converted to a carbon fiber-aluminum composite structure, resulting in enhancing the ability to withstand impact and increasing the overall strength and durability, thereby certainly achieving the object of the present disclosure.

In the present description, the terms "attached", "connected", "fixed", etc. should be understood in a broad sense, and may be fixed connection, detachable connection, or be integral; may be mechanical connections or electrical connections; may be directly connected, or may also be indirectly connected through a middle medium, may be the internal connection between two elements or interaction relationship of the two elements. A person skilled in the art may appreciate the specific meaning of the foregoing terms in this disclosure. Furthermore, the specific features, structures, etc. described in the embodiments are included in at least one embodiment, such as those skilled in the art may combine features of different implementations without conflicting with each other. The scope of protection of the present disclosure is not limited to the above-described specific example approaches, following the basic technical idea according to the present disclosure, those ordinarily skilled in the art need not engage in creative labor and can reason out an implementation, all the aforementioned belong to the scope of protection of the present disclosure.

## Claims

1. A multi-piece wheel frame, **characterized by**:
a rim (2) including a barrel (21), an inner flange portion (22) connected to a periphery of said barrel (21) and protruding radially inwardly, and an outer rim portion (23) protruding outwardly from an intersection of said barrel (21) and said inner flange portion (22), said inner flange portion (22) forming a planar surface (221) that has a normal vector parallel to a central axis of said barrel (21), said outer rim portion (23) forming an inclined surface (231) that is connected to an outer periphery of said planar surface (221) and that cooperates with said planar surface (221) to form an obtuse angle, and a ring edge surface (232) that is connected to an outer edge of said inclined surface (231) and that cooperates with said inclined surface (231) to form an obtuse angle; and
a disc (3) fixed to said rim (2), and including a disc core (31), a plurality of spoke portions (32) that extend radially outwardly from said disc core (31) and that are annularly spaced apart from each other, and a reinforced ring portion (33) that is connected to said spoke portions (32) and that is fixed to said outer rim portion (23), said reinforced ring portion (33) abutting against at least one of said inclined surface (231) and said ring edge surface (232).

2. The multi-piece wheel frame as claimed in claim 1, **characterized in that** said ring edge surface (232) of said rim (2) has a normal vector perpendicular to the normal vector of said planar surface (221).

3. The multi-piece wheel frame as claimed in claim 1, **characterized in that** said reinforced ring portion (33) of said disc (3) abuts against said inclined surface (231), and has an oblique annular surface (331) clinging to said inclined surface (231).

4. The multi-piece wheel frame as claimed in claim 1, **characterized in that** said reinforced ring portion (33) of said disc (3) abuts against said ring edge surface (232), and has an annular peripheral surface (332) clinging to said ring edge surface (232).

5. The multi-piece wheel frame as claimed in claim 1, **characterized in that** said reinforced ring portion (33) of said disc (3) abuts against said inclined surface (231) and said ring edge surface (232), and has an oblique annular surface (331) clinging to said inclined surface (231), and an annular peripheral surface (332) connected to an outer edge of said oblique annular surface (331) and clinging to said ring edge surface (232).

6. The multi-piece wheel frame as claimed in claim 1, **characterized in that** said rim (2) is made of a carbon fiber material, and said disc (3) is made of a metal material.

7. The multi-piece wheel frame as claimed in claim 1, **characterized in that** said disc core (31) and said spoke portions (32) of said disc (3) are made of a metal material, said reinforced ring portion (33) being made of a material different from that of said disc core (31) and said spoke portions (32).

## Amended claims

### Amended claims in accordance with Rule 137(2) EPC.

1. A multi-piece wheel frame, comprising:
a rim (2); and
a disc (3) fixed to said rim (2), and including a disc core (31), a plurality of spoke portions (32) that extend radially outwardly from said disc core (31) and that are annularly spaced apart from each other, and a reinforced ring portion (33) that is connected to said spoke portions (32) and that is fixed to said outer rim portion (23), said reinforced ring portion (33) abutting against at least one of said inclined surface (231) and said ring edge surface (232);
**characterized in that**
including a barrel (21), an inner flange portion (22) connected to a periphery of said barrel (21) and protruding radially inwardly, and an outer rim portion (23) protruding outwardly from an intersection of said barrel (21) and said inner flange portion (22), said inner flange portion (22) forming a planar surface (221) that has a normal vector parallel to a central axis of said barrel (21), said outer rim portion (23) forming an inclined surface (231) that is connected to an outer periphery of said planar surface (221) and that cooperates with said planar surface (221) to form an obtuse angle, and a ring edge surface (232) that is connected to an outer edge of said inclined surface (231) and that cooperates with said inclined surface (231) to form an obtuse angle, and
said ring edge surface (232) of said rim (2) has a normal vector perpendicular to the normal vector of said planar surface (221).

2. The multi-piece wheel frame as claimed in claim 1, wherein said reinforced ring portion (33) of said disc (3) abuts against said inclined surface (231), and has an oblique annular surface (331) clinging to said inclined surface (231).

3. The multi-piece wheel frame as claimed in claim 1, wherein said reinforced ring portion (33) of said disc (3) abuts against said ring edge surface (232), and has an annular peripheral surface (332) clinging to said ring edge surface (232).

4. The multi-piece wheel frame as claimed in claim 1, wherein said reinforced ring portion (33) of said disc (3) abuts against said inclined surface (231) and said ring edge surface (232), and has an oblique annular surface (331) clinging to said inclined surface (231), and an annular peripheral surface (332) connected to an outer edge of said oblique annular surface (331) and clinging to said ring edge surface (232) .

5. The multi-piece wheel frame as claimed in claim 1, wherein said rim (2) is made of a carbon fiber material, and said disc (3) is made of a metal material.

6. The multi-piece wheel frame as claimed in claim 1, wherein said disc core (31) and said spoke portions (32) of said disc (3) are made of a metal material, said reinforced ring portion (33) being made of a material different from that of said disc core (31) and said spoke portions (32).
